# EUROPÄISCHE PATENTSCHRIFT

(11) **EP 0 841 027 B1**
(45) Veröffentlichungstag und Bekanntmachung des Hinweises auf die Patenterteilung: **11.12.2002**
(21) Anmeldenummer: 96120967.3
(22) Anmeldetag: 28.12.1996
(51) Int. Cl.: A47C 7/46

(54) **Rückenkissen mit einer formstabilen Stützplatte**
A cushion for a backrest having a form-stable support
Coussin pour dossier avec un support de forme stable

(30) Priorität: 05.11.1996 DE 29619129 U
(43) Veröffentlichungstag der Anmeldung: 13.05.1998
(73) Patentinhaber: Bort GmbH, 71384 Weinstadt-Benzach (DE)
(72) Erfinder: Bort, Rudi, 71384 Weinstadt (DE)
(74) Vertreter: Patentanwälte Ruff, Wilhelm, Beier, Dauster & Partner

(56) Entgegenhaltungen:
- GB-A- 2 057 257
- US-A- 4 350 388
- US-A- 4 541 670
- US-A- 4 722 569

## Beschreibung

Die Erfindung betrifft ein Rückenkissen mit einer Stützplatte, über deren Fläche mehrere parallel und längs der Stützplatte verlaufende, elastisch verformbare Stützzungen verteilt sind, die in gegenüberliegenden Stirnbereichen der Stützplatte gehalten sind, wobei zwischen den Stützzungen und der Stützplatte eine sich quer zu den Stützzungen über die Breite der Stützplatte erstreckende Stützleiste angeordnet ist, wodurch die Stützzungen bogenförmig gekrümmt ausgestellt sind, und wobei die Stützleiste mittels eines manuell betätigbaren Verzahnungsgetriebes zwischen den Stützzungen und der Stützplatte längs der Stützplatte höhenverstellbar ist.

Ein solches Rückenkissen ist bekannt. Das bekannte Rückenkissen weist eine formstabile Stützplatte auf, über deren Länge sich mehrere, parallel zueinander angeordnete elastische Stützzungen erstrecken, die durch eine Stützleiste, die zwischen der Stützplatte und den Stützzungen angeordnet ist, bogenförmig abgestellt sind. Der durch die Stützplatte, die Stützzungen und die Stützleiste gebildete Stützmechanismus ist in einem Kissenbezug des Rückenkissens integriert, wobei zwischen den Stützzungen und dem Kissenbezug ein Schaumstoffkissen eingebracht ist, das die Polsterung des Rückenkissens bewirkt. Die Stützleiste stellt eine Welle dar, an deren gegenüberliegenden Stirnbereichen jeweils ein Ritzel angeformt ist, das mit jeweils einer korrespondierenden Zahnstange, die sich längs der Stützplatte erstrecken, kämmt. Mittels eines Drehgriffes ist diese als Welle gestaltete Stützleiste verdrehbar, wodurch eine Höhenverlagerung der Stützleiste längs der Stützplatte erzielt wird, die die Ausstellung der bogenförmigen Stützzungen in unterschiedlichen Höhenpositionen bewirkt.

Aufgabe der Erfindung ist es, ein Rückenkissen der eingangs genannten Art zu schaffen, bei dem mit einfachen Mitteln zusätzlich eine Tiefenverstellbarkeit der Stützungen und damit des Rückenkissens erzielbar ist.

Diese Aufgabe wird dadurch gelöst, daß die Stützleiste einen polyederartigen Stützkörper aufweist, dessen Umfang durch wenigstens drei Außenflächenpaare gebildet ist, die jeweils zwei auf gegenüberliegenden Seiten des Stützkörpers angeordnete und zueinander zumindest im wesentlichen parallele Stützflächen aufweisen, wobei sich jeweils eine Stützfläche an der Stützplatte und die gegenüberliegende Stützfläche sich an den Stützzungen abstützt, und wobei die gegenüberliegenden Stützflächen jeweils in unterschiedlichen Abständen zueinander angeordnet sind, und daß der Stützkörper derart um eine Längsachse verdrehbar gelagert ist, daß sich je nach der wirksamen Stellung der Stützflächen unterschiedliche Abstände der Stützzungen zu der Stellplatte ergeben. Dadurch wird mit einfachen Mitteln eine wenigstens dreifache Tiefenverstellbarkeit des Rückenkissens erzielt, indem der Stützkörper durch eine Verdrehung um seine Längsachse unterschiedlich große Ausstellungen der Stützzungen bewirkt. Die Tiefenverstellbarkeit ist mit äußerst geringem Aufwand herstellbar, da lediglich eine äußerst geringe Anzahl an Bauteilen benötigt wird. Vorzugsweise ist die Längsachse exzentrisch zu einer Schwerpunktachse des Stützkörpers angeordnet.

In Ausgestaltung der Erfindung weist die Stützleiste eine mit dem Verzahnungsgetriebe versehene, quer über die Breite der Stützplatte verlaufende und längs dieser höhenverlagerbare Stellwelle auf, die koaxial zur Drehachse des Stützkörpers ausgerichtet ist, und auf der der Stützkörper verdrehbar gelagert ist. Die Stellwelle und der Stützkörper bilden somit eine kompakte Baueinheit, die für das Rückenkissen sowohl eine Höhenverstellbarkeit als auch eine Tiefenverstellbarkeit der wirksamen Ausstellbereiche der Stützzungen gewährleisten.

In weiterer Ausgestaltung der Erfindung sind die jeweils den Stützzungen zugewandten Stützflächen der Außenflächenpaare mit einer sich über die Länge des Stützkörpers erstreckenden konkaven Krümmung versehen. Durch die konkave Krümmung werden auch die Ausstellbereiche der Stützzungen über die Breite des Rückenkissens einer entsprechend konkaven Krümmung unterworfen, wodurch eine verbesserte Anpassung an entsprechende Rükkenbereiche der das Rückenkissen nutzenden Personen erzielt wird.

In weiterer Ausgestaltung der Erfindung ist der Stützkörper an einer Stirnseite mit einem Griff zur manuellen Verdrehung versehen. Dadurch ist der Stützkörper in einfacher Weise seitlich von außen in seine unterschiedlichen Tiefenpositionen überführbar.

In weiterer Ausgestaltung der Erfindung sind der Stützkörper und die Stellwelle jeweils einstückig aus Kunststoff hergestellt. Dies ist eine besonders kostengünstige Ausgestaltung.

In weiterer Ausgestaltung der Erfindung ist der Stützkörper mittels einer Rastverbindung lösbar auf der Stellwelle verrastet. Dadurch werden keine zusätzlichen Befestigungs- oder Lagerelemente benötigt.

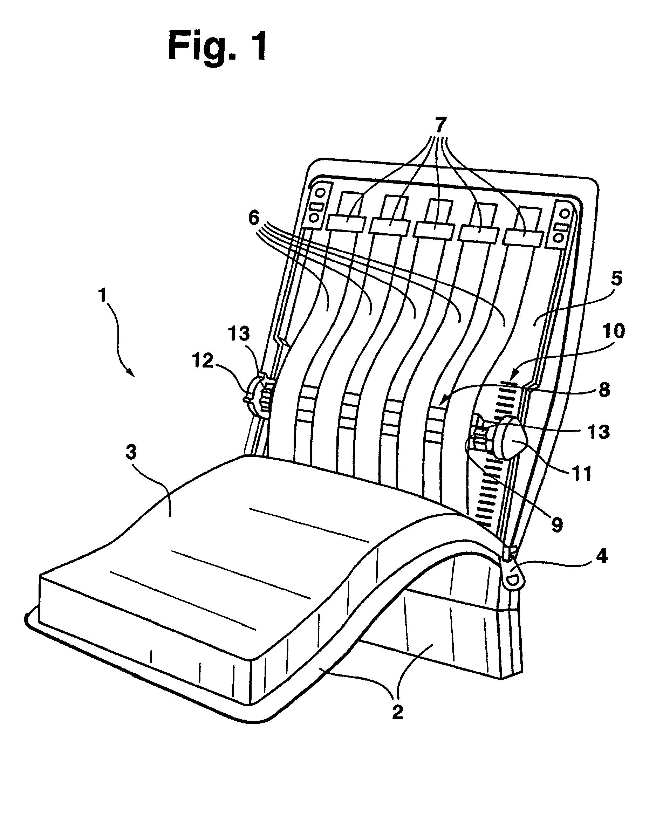

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Rückenkissens in aufgeklapptem Zustand,
- Fig. 2: die aus einem Stützkörper und einer Stellwelle bestehende Stützleiste des Rückenkissens nach Fig. 1,
- Fig. 3: in einem Querschnitt den Stützkörper nach Fig. 2 in einer ersten Tiefenstellung,
- Fig. 4: den Stützkörper nach Fig. 2 in einer zweiten Tiefenstellung, und
- Fig. 5: den Stützkörper nach Fig. 2 in seiner dritten Tiefenstellung.
Ein Rückenkissen 1 weist gemäß Fig. 1 einen Kissenbezug 2 auf, der mittels eines Reißverschlusses 4 aufklappbar ist. Im Inneren ist auf einer dem Rücken einer an dem Rückenkissen 1 lehnenden Person zugewandten Seite des Kissenbezuges 2 ein Schaumstoffkissen 3 vorgesehen, das auf die Abmessungen des Kissenbezuges 2 abgestimmt ist. Die Stützfunktion des Rückenkissens 1 wird durch einen nachfolgend näher beschriebenen Stützmechanismus erzielt.

Der Stützmechanismus weist eine zumindest weitgehend formstabile Stützplatte 5 auf, die ebenfalls derart an die Abmessungen des Kissenbezuges 2 angepaßt ist, daß sie das Innere des Kissenbezuges 2 sowohl über die Länge als auch über die Breite des Kissenbezuges 2 ausfüllt. Die Stützplatte 5 ist aus einem formstabilen Kunststoff hergestellt. Die Stützplatte 5 weist sowohl in ihrem oberen Stirnbereich als auch in ihrem unteren Stirnbereich auf ihrer dem Schaumstoffkissen 3 zugewandten Seite jeweils fünf nebeneinanderliegende Lagerbügel 7 auf, in die fünf elastische Stützzungen 6 eingeschoben sind, die sich über die Länge der Stützplatte 5 parallel zueinander erstrecken. Die Stützzungen 6 sind elastisch verformbar und werden durch eine Stützleiste 8, 9 in einem Ausstellbereich durch eine bogenförmige Krümmung in Richtung des Schaumstoffkissens 3 ausgestellt. Der Ausstellbereich der Stützzungen 6 kann in seiner Höhe längs der Stützplatte 5 verlagert werden, indem die Stützleiste 8 in nachfolgend näher beschriebener Weise mittels eines Verzahnungsgetriebes in Form eines Zahnstangentriebes 10, 13 längs der Stützplatte 5 verschoben wird.

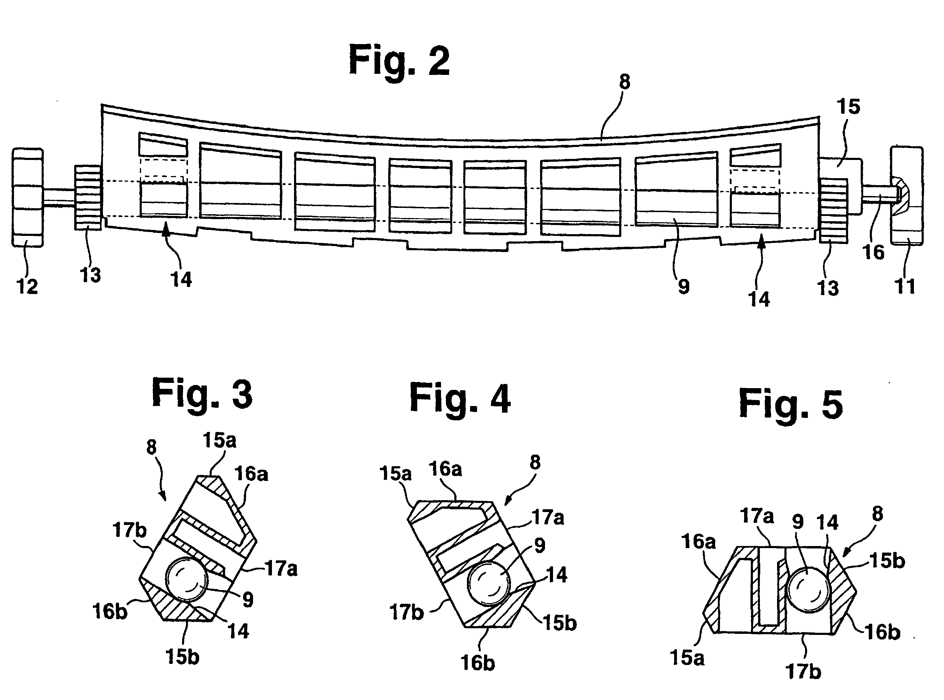

Die Stützleiste, die zwischen den Stützzungen 6 und der Stützplatte 5 angeordnet ist, setzt sich zusammen aus einer Stellwelle 9 und einem polyederartigen Stützkörper 8, die jeweils einstückig aus einem formstabilen Kunststoff hergestellt sind. Der Stützkörper 8 übernimmt die Abstützung zu den Stützzungen 6 und rückseitig zur Stützplatte 5 und ist mittels der Stellwelle 9 längs der Stützplatte 5 in den Grenzen des nachfolgend näher beschriebenen Zahnstangentriebes höhenverschiebbar. Der polyederartige Stützkörper 8 (Fig. 2 bis 5) ist einstückig aus Kunststoff hergestellt und erstreckt sich über die gesamte Breite der Stützzungen 6 in ihrer an der Stützplatte 5 montierten Position (Fig. 1). Der Umfang des Stützkörpers 8 wird durch drei Außenflächenpaare 15a, 15b; 16a, 16b; 17a, 17b gebildet, wobei jedes Außenflächenpaar aus zwei einander gegenüberliegenden und zueinander parallelen Stützflächen 15a, 15b; 16a, 16b; 17a, 17b gebildet ist. Die Stützflächen 15 a bis 17b weisen jeweils unterschiedliche Breiten auf.

Die Stützflächen 15a, 16a, 17a weisen über die Länge des Stützkörpers 8 eine gleichmäßige konkave Krümmung auf. Die korrespondierenden Stützflächen 15b, 16b, 17b sind beim dargestellten Ausführungsbeispiel in entsprechender Weise konvex gekrümmt. Diese Stützflächen 15b bis 17b können jedoch auch eben gestaltet sein. Die Stützflächen 15a bis 17a stützen sich an den Unterseiten der Stützzungen 6 ab. Die Stützflächen 15b, 16b, 17b hingegen stützen sich rückseitig an der Oberseite der Stützplatte 5 ab. Der Stützkörper 8 weist über seine Länge eine rinnenartige Vertiefung auf, die exzentrisch, jedoch achsparallel zu einer Schwerpunktachse des Stützkörpers 8 verläuft. In dieser Vertiefung wird die Stellwelle 9 aufgenommen, die zylindrisch gestaltet ist. Die Stellwelle 9 wird in einfacher Weise in die rinnenförmige Vertiefung eingeklipst. Dazu weist der Stützkörper 8 im Bereich von zwei an gegenüberliegenden Stirnabschnitten des Stützkörpers 8 vorgesehenen Lagerpunkten jeweils ein Rastnasenpaar 14 auf, das die Stellwelle 9 in der eingerasteten Position sichert. Die Stellwelle 9 ist um die exzentrische Längsachse des Stützkörpers 8 in dem Stützkörper 8 drehbar gelagert.

Die Stellwelle 9 weist an ihren gegenüberliegenden Stirnenden jeweils ein einstückig angeformtes Ritzel 13 auf, die die gegenüberliegenden Stirnseiten des Stützkörpers 8 flankieren. Diese Ritzel 13 kämmen mit zwei Zahnreihen 10, die einstückig an der Oberseite der Stellplatte 5 in ihren seitlichen Randbereichen angeformt sind und sich über einen mittleren Bereich der Stützplatte 5 (Fig. 1) erstrecken. Auf der in den Fig. 1 und 2 linken Seite ist an der Stellwelle 9 ein Stellrad 12 angeformt, das über einen nicht näher bezeichneten Wellenfortsatz an das Ritzel 13 anschließt. Die drehfeste Anbindung des Stellrades 12 an die Stellwelle 9 gewährleistet, daß eine Drehung des Stellrades 12 eine Höhenverlagerung der Stellwelle 9 längs der Stützplatte 5 und damit auch eine Längsverschiebung des Stützkörpers 8 längs der Stützplatte 5 bewirkt.

Der Stützkörper 8 ist um die Mittellängsachse der Stellwelle 9, die auch die Drehachse der Stellwelle 9 bildet, stufenweise verdrehbar. Da die Mittellängsachse der Stellwelle 9, um die der Stützkörper 8 verdrehbar ist, exzentrisch innerhalb des Stützkörpers 8 vorgesehen ist, bewirkt eine Verdrehung des Stützkörpers 8 um die Stellwelle 9 gleichzeitig auch unterschiedliche Abstände der Stützzungen 6 zu der Oberseite der Stützplatte 5. Um in den unterschiedlichen Verdrehpositionen des Stützkörpers 8 ein Abheben der Stellwelle 9 und insbesondere der Ritzel 13 von den Zahnreihen 10 zu vermeiden, wodurch die Höhenverstellbarkeit aufgehoben wäre, sind die Abstände der drei sich auf der Stützplatte 5 abstützenden Stützflächen 15b, 16b und 17b jeweils identisch zur Mittellängsachse der Stellwelle 9. Lediglich die Abstände der Stützflächen 15a, 16a und 17a zu der Längsachse, die sich an der Unterseite der Stützzungen 6 abstützen, unterscheiden sich voneinander, wodurch die unterschiedlichen Verstellpositonen für die Tiefe des Rückenkissens 1 erzielt werden. Denn je nachdem, ob die Stützfläche 15a, die Stützfläche 16a oder die Stützfläche 17a sich an den Stützzungen 6 abstützt, ergeben sich unterschiedliche Abstände der Stützzungen 6 zur Stützplatte 5 und damit eine unterschiedliche Bogenkrümmung der Stützzungen 6. Dadurch wird für das Rückenkissen 1 eine unterschiedliche, in drei Stufen unterteilte Tiefe erzielt, die unterschiedliche Stützwirkungen auf einen Rücken einer das Rückenkissen 1 nutzenden Person ausüben. Aus der Position nach Fig. 3 wird der Stützkörper 8 im Gegenuhrzeigersinn so weit verdreht, bis die Stützfläche 16b sich flächig auf der Stützplatte 5 abstützt. Durch die jeweils ebene Gestaltung und die kantigen Übergänge zwischen den einzelnen Stützflächen werden jeweils stabile Stützpositionen in allen drei Tiefenstellungen erzielt.

Der Stützkörper 8 sollte immer nur so weit verschwenkt werden, daß sich jeweils eine der Stützflächen 15b, 16b oder 17b auf der Stützplatte 5 abstützt, da nur in diesen Stellungen ein Eingriff der Ritzel 13 in die Zahnreihen 10 gewährleistet ist. In diesen Stellungen ist somit gleichzeitig zur jeweils eingestellten Tiefenposition auch eine Höhenverstellung, d.h. eine Längsverlagerung des Stützkörpers 8 längs der Stützplatte 5 möglich. Um den Stützkörper 8 in einfacher Weise manuell in seine unterschiedlichen Positonen verdrehen zu können, ragt von der dem Stellrad 12 gegenüberliegenden Stirnseite des Stützkörpers 8 eine einstückig angeformte Haltebrücke 15 ab, die das Ritzel 13 übergreift und in einen nach außen abragenden Fortsatz 16 übergeht, auf dem ein Drehgriff 11 stabil festgelegt ist. Eine Verdrehung des Drehgriffs 11 bewirkt durch seine starre Verbindung mit der Haltebrücke 15 und damit auch mit dem Stützkörper 8 eine Verdrehung des Stützkörpers 8 in die jeweils gewünschte Tiefenposition.

## Patentansprüche

1. Rückenkissen mit einer Stützplatte, über deren Fläche mehrere parallel und längs der Stützplatte verlaufende, elastisch verformbare Stützzungen verteilt sind, die in gegenüberliegenden Stirnbereichen der Stützplatte gehalten sind, wobei zwischen den Stützzungen und der Stützplatte eine sich quer zu den Stützzungen über die Breite der Stützplatte erstreckende Stützleiste angeordnet ist, wodurch die Stützzungen bogenförmig gekrümmt ausgestellt sind, und wobei die Stützleiste mittels eines manuell betätigbaren Verzahnungsgetriebes zwischen den Stützzungen und der Stützplatte längs der Stützplatte höhenverstellbar ist,
**dadurch gekennzeichnet,**
**daß** die Stützleiste einen polyederartigen Stützkörper (8) aufweist, dessen Umfang durch wenigstens drei Außenflächenpaare (15a, 15b; 16a, 16b; 17a, 17b) gebildet ist, die jeweils zwei auf gegenüberliegenden Seiten des Stützkörpers (8) angeordnete und zueinander zumindest im wesentlichen parallele Stützflächen (15a bis 17b) aufweisen, wobei sich jeweils eine Stützfläche (15b, 16b, 17b) an der Stützplatte (5) und die gegenüberliegende Stützfläche (15a, 16a, 17a) sich an den Stützzungen (6) abstützt, und wobei die gegenüberliegenden Stützflächen (15 bis 17b) jeweils in unterschiedlichen Abständen zueinander angeordnet sind, und daß der Stützkörper (8) derart um eine Längsachse verdrehbar gelagert ist, daß sich je nach der wirksamen Stellung der Stützflächen (15a bis 17b) unterschiedliche Abstände der Stützzungen (6) zu der Stellplatte (5) ergeben.

2. Rückenkissen nach Anspruch 1, **dadurch gekennzeichnet, daß** die Stützleiste eine mit dem Verzahnungsgetriebe versehene, quer über die Breite der Stützplatte (5) verlaufende und längs dieser höhenverlagerbare Stellwelle (9) aufweist, die koaxial zur Drehachse des Stützkörpers (8) ausgerichtet ist, und auf der der Stützkörper (8) verdrehbar gelagert ist.

3. Rückenkissen nach Anspruch 1, **dadurch gekennzeichnet, daß** die jeweils den Stützzungen (6) zugewandten Stützflächen (15a, 16a, 17a) der Außenflächenpaare (15a bis 17b) mit einer sich über die Länge des Stützkörpers (8) erstreckenden konkaven Krümmung versehen sind.

4. Rückenkissen nach wenigstens einem der vorhergehenden Ansprüche, **dadurch gekennzeichnet, daß** der Stützkörper (8) an einer Stirnseite mit einem Griff (11) zur manuellen Verdrehung versehen ist.

5. Rückenkissen nach wenigstens einem der vorhergehenden Ansprüche, **dadurch gekennzeichnet, daß** der Stützkörper (8) und die Stellwelle (9) jeweils einstückig aus Kunststoff hergestellt sind.

6. Rückenkissen nach Anspruch 5, **dadurch gekennzeichnet, daß** der Stützkörper (8) mittels einer Rastverbindung (14) lösbar mit der Stellwelle (9) verrastet ist.

7. Rückenkissen nach Anspruch 2, **dadurch gekennzeichnet, daß** auf der Stützplatte (5) zwei Verzahnungsreihen (10) vorgesehen sind, und daß auf der Stellwelle (9) jeweils korrespondierend zwei Ritzel (13) einstückig angeformt sind.

## Claims

1. A back cushion with a support plate with a surface over which several elastically deformable support tongues are spread out parallel and along the support plate which are fastened on opposite front areas of the support plate, wherein there is a support strip that extends between the support tongues and the support plate over the width of the support plate and that is perpendicular to the support tongues causing the support tongues to bend in an arc, and wherein the support strip can be adjusted in height between the support tongues and the support plate with a manually operated gear drive,
**characterized in that**
the support strip contains a polyhedron support body (8), the circumference of which is created by at least three outer surface pairs (15a, 15b; 16a, 16b; 17a, 17b), which each have two support surfaces (15a to 17b) on opposite sides of the support body (8) that are, at least approximately, parallel, and wherein one support surface each (15b, 16b, 17b) is supported by the support plate (5) while the opposite support surface (15a, 16a, 17a) is supported by the support tongues (6), and wherein the opposite support surfaces (15 to 17b) are each arranged at different distances, and wherein the support body (8) is suspended rotating around a longitudinal axis in such a manner that different distances between the support tongues (6) and the support plate (5) are set according to the effective position of the support surfaces (15a to 17b).

2. A back cushion according to claim 1, **characterized in that** the support strips contains an adjusting shaft (9), which is equipped with the gear transmission and which extends over the width of the support plate (5) and can be adjusted in height with respect to the support plate and which is aligned coaxial to the rotating axis of the support body (8), wherein the support body (8) is suspended rotating on this adjusting shaft (9).

3. A back cushion according to claim 1, **characterized in that** the support surfaces (15a, 16a, 17a) of the outer surface pairs (15a to 17b) that are facing the support tongues (6) have a concave bent extending over the length of the support body (8).

4. A back cushion according to at least one of the previous claims, **characterized in that** the support body (8) is equipped with a handle (11) on one of the fronts, which is used for manual rotation.

5. A back cushion according to at least one of the previous claims, **characterized in that** the support body (8) and the adjusting shaft (9) are each made of one piece of plastic.

6. A back cushion according to claim 5, **characterized in that** the support body (8) engages with the adjusting shaft (9) in a releasable connection (14).

7. A back cushion according to claim 2, **characterized in that** two gear rows (10) are provided on the support plate (5), and wherein there are two corresponding pinions (13), made of one piece, on the adjusting shaft (9).

## Revendications

1. Coussin pour le dos équipé d'une plaque d'appui, sur la surface de laquelle plusieurs lattes élastiques sont réparties parallèlement et dans le sens longitudinal par rapport à la plaque d'appui et maintenues sur les parties opposées de la face avant de la plaque d'appui,entre les lattes et la plaque d'appui est disposée une barre d'appui perpendiculairement aux lattes sur toute la largeur de la plaque d'appui et qui fait saillir les lattes et provoque une courbure en arc, la barre d'appui étant réglable en hauteur le long de la plaque d'appui au moyen d'un engrenage denté à commande manuelle situé entre les lattes et la plaque d'appui,
**caractérisé par le fait que**
la barre d'appui présente un corps d'appui (8) en forme de polyèdre, dont la circonférence est constituée par au moins trois paires de faces extérieures (15a, 15b, 16a, 16b, 17a, 17b) présentant chacune deux faces d'appui (15a à 17b) sur les côtés opposés du corps d'appui (8) et essentiellement parallèles entre elles, une face d'appui (15b, 16b, 17b) s'appuyant sur la plaque d'appui (5) et la surface d'appui (15a, 16a, 17a) opposée s'appuyant sur les lattes (6) et où les faces d'appui opposées (15a à 17b) sont disposées à des distances différentes les unes des autres et où le corps d'appui (8) peut être tourné autour d'un axe longitudinal de façon à obtenir des distances différentes entre les lattes (6) et la plaque de réglage (5) selon la position effective des faces d'appui (15a à 17b).

2. Coussin pour le dos selon la revendication 1, **caractérisé par le fait que** la barre d'appui présente une tige de réglage (9) pourvue de l'engrenage denté et disposée transversalement à la plaque d'appui (5) et réglable en hauteur le long de celle-ci, laquelle tige est orientée co-axialement par rapport à l'axe de rotation du corps d'appui (8) sur lequel le corps d'appui (8) peut tourner.

3. Coussin pour le dos selon la revendication 1, **caractérisé par le fait que** les faces d'appui (15a, 16a et 17a) des paires de faces extérieures (15a à 17b) orientées vers les lattes (6) sont dotées d'une courbure concave s'étendant sur la longueur du corps d'appui (8).

4. Coussin pour le dos selon au moins une des revendications précédentes, **caractérisé par le fait que** le corps d'appui (8) est pourvu à l'avant d'une poignée (11) pour la rotation manuelle.

5. Coussin pour le dos selon au moins une des revendications précédentes, **caractérisé par le fait que** le corps d'appui (8) et la tige de réglage sont fabriqués chacun d'une seule pièce en plastique.

6. Coussin pour le dos selon la revendication 5, **caractérisé par le fait que** le corps d'appui (8) est encliqueté de façon amovible sur la tige de réglage (9) au moyen d'un raccord encliquetable (14).

7. Coussin pour le dos selon la revendication 2, **caractérisé par le fait que** sur la plaque d'appui (8) sont prévues deux rangées de dents et que sur la tige de réglage (9) deux pignons correspondants (13) sont moulés en une seule pièce.
